# EUROPÄISCHE PATENTSCHRIFT

(11) **EP 0 939 063 B1**
(45) Veröffentlichungstag und Bekanntmachung des Hinweises auf die Patenterteilung: **25.07.2001**
(21) Anmeldenummer: 98121733.4
(22) Anmeldetag: 14.11.1998
(51) Int. Cl.: C03C 25/12, D04H 1/00

(54) **Verfahren und Vorrichtung zur Beschichtung und/oder Imprägnierung von Mineralwolleprodukten**
Method and apparatus for coating and/or impregnating mineral wool products
Procédé et dispositif pour le revêtement et/ou imprégnation de produits de laine minérale

(30) Priorität: 27.02.1998 DE 19808518
(43) Veröffentlichungstag der Anmeldung: 01.09.1999
(73) Patentinhaber: Deutsche Rockwool Mineralwoll-GmbH, 45966 Gladbeck (DE)
(72) Erfinder: Klose, Gerd-Rüdiger Dr.-Ing., 46286 Dorsten (DE)
(74) Vertreter: Wanischeck-Bergmann, Axel, Dipl.-Ing.

(56) Entgegenhaltungen:
- EP-A- 0 418 150
- DE-U- 29 616 962
- US-A- 3 772 054
- US-A- 5 268 015

## Beschreibung

Die Erfindung betrifft ein Verfahren zur Beschichtung und/oder Imprägnierung von Mineralwolleprodukten, vorzugsweise Mineralwolleplatten oder -matten, insbesondere Mineralwollelamellenmatten mit einem Klebemörtel, einer Kunststoffdispersion, Mikrozementen und/oder einer anderen Beschichtung. Femer betrifft die Erfindung eine Vorrichtung zur Beschichtung und/oder Imprägnierung von Mineralwolleprodukten, vorzugsweise Mineralwolleplatten oder -matten, insbesondere Mineralwollelamellenplatten, mit einem Klebemörtel, einer Kunststoffdispersion, Mikrozementen und/oder einer anderen Beschichtung, insbesondere unter Anwendung des Verfahrens, mit einer Auflage für das Mineralwolleprodukt, insbesondere einem Stetigförderer in Form eines Förderbandes.

Mineralwolleprodukte sind beispielsweise als Steinwolledämmstoffe bekannt und auf dem Markt erhältlich. Hierbei handelt es sich insbesondere um Mineralwolleplatten, Mineralwollematten und/oder Mineralwollelamellenplatten. Derartige Dämmstoffe werden beispielsweise auf Fassaden aufgeklebt und mit verschiedenartigen Putzen abgedeckt. Das System aus den Dämmstoffen und den Abdeckputzen wird als Wärmedämmverbundsystem bezeichnet. Für die Standsicherheit dieser Wärmedämmverbundsysteme gegenüber den verschiedenen Lasffällen ist eine hohe Querzugfestigkeit zwischen der Dämmstoffplatte bzw. -matte und dem Baukleber, mit dem die Platte bzw. Matte auf die Fassade aufgeklebt wird, bzw. dem Putz erforderlich.

In der Regel sind entsprechende Mineralwolleprodukte hydrophob, extrem feinporig und zudem unter Druck kompressibel. Hierdurch wird die Porengröße des Mineralwolleproduktes weiter reduziert. In Wasser dispergierte Klebemörtel, Wasserglas- oder Kunststoffbeschichtungen respektive Mischungen daraus müssen deshalb mit oberflächenaktiven Substanzen versetzt werden, um die Oberfläche zu benetzen und in die Oberflächenschicht des Mineralwolleproduktes einzudringen. Bei auftretendem Tauwasser oder einem Angriff durch Schlagregen können derartige Substanzen selbst in geringen Konzentrationen zu einer unerwünschten Ansammlung von Wasser in dem Mineralwolleprodukt führen.

Es ist weiterhin bekannt, Oberflächenverstärkungen aus Mikrozementen, zementgebundenen Mörteln unter Druck in die Oberflächenschicht der Mineralwolleprodukte für Wärmedämmverbundysteme einzuarbeiten. Diese Oberflächenverstärkungen haben im Vergleich zu den Elementarfasern eine Größe, die als relativ grobkörnig bezeichnet werden kann. Zum Einarbeiten dieser Oberflächenverstärkungen sind Zahnspachtel, Reiben oder dergleichen bekannt. Diese in der Regel manuelle Bearbeitung stellt auf Baustellen eine aufwendige und damit teure Arbeit dar. Gleichzeitig ist nicht sichergestellt, daß bei der Handarbeit das gewünschte Ergebnis im vollen Umfang erzielt wird.

Die voranstehend beschriebene Bearbeitung der Oberflächen von Dämmstoffplatten hat den wesentlichen Vorteil, daß die Oberflächen der Dämmstoffplatten in maschinell auf die Bauwerksoberfläche aufgebrachte Kleberschichten eingedrückt werden können. Die Putzschichten können ebenfalls maschinell auf die Dämmstoffplatten aufgebracht werden, halten aber bei Handauftrag generell besser, wobei weiterhin das Problem besteht, daß eine maschinell aufgebrachte Putzschicht bei unsachgemäßer Handhabung der hierfür zur Verfügung stehenden Maschinen zu einer Beschädigung der Wärmedämmelemente führen kann.

Von wesentlicher Bedeutung für den erreichten Grad des kraftschlüssigen Verbundes zwischen den Mineralwolleprodukten und der Bauwerksoberfläche einerseits und den Mineralwolleprodukten und den Putzschichten andererseits sind u.a. die Benetzungsfähigkeit von Kleber und Beschichtung sowie die Kapillar- und Adhäsionskräfte. Unter Baustellenbedingungen kann aber von konstanten Verarbeitungsbedingungen nicht ausgegangen werden. Darüber hinaus spielt auch die Beschaffenheit der Bauwerksoberfläche eine große Bedeutung bei der Verarbeitung der hier in Rede stehenden und beschriebenen Wärmedämmverbundsysteme. Bei großen Unebenheiten in der Bauwerksoberfläche müssen diese durch einen erhöhten Auftrag von Klebemörtel oder dergleichen ausgeglichen werden, um ein ebenes Auftragen bzw. Anbringen der Dämmstoffplatten zu ermöglichen.

Das Beschichten von Mineralwolleprodukten mit Zementmischungen oder Kunststoff-Dispersionen, Wasserglas-Mischungen oder dergleichen führt zu einem Schwindungsprozeß nach dem Austrocknen des Beschichtungsmaterials. Die Folge eines einseitigen Auftrages einer derartigen Beschichtung ist somit, daß sich der Dämmstoff mehr oder weniger verkrümmt. Hierbei hat sich herausgestellt, daß Lamellenplatten stärker deformiert werden als Dämmstoff-Platten, die eine ungerichtete Faseranordnung aufweisen. Beispielsweise beträgt der Stich einer mit einer Zementmörtel beschichteten Lamellenplatte mit einer Kantenlänge von 1,0 m und einer Materialstärke von 0,2 m sowie einer Rohdichte von ca. 80 bis 90 kg/m³ zwischen 20 und 25 mm. Durch den Auftrag einer Wasserglas-Kunststoff-Dispersion kann sich eine Lamellenplatte mit einer Kantenlänge von 100 mm einseitig bis zu einer Bogenhöhe von ca. 3 mm verkürzen.

Eine negative Auswirkung dieser Verkrümmung hängt in erster Linie von der Zugfestigkeit der Beschichtung ab, wenn beispielsweise die Lamellenplatte in die Kleberschicht gedrückt wird. Ist die Haftkraft des Klebers hoch, so wird der Kleber die Deformation der Lamellenplatte ausgleichen. Bei geringer Haftkraft des Klebers neigt die Lamellenplatte hingegen zu einem partiellen Ablösungsprozeß. Dieses Ablösen der Lamellenplatte verringert die Querzugfestigkeit des Verbundes und reduziert die Standfestigkeit des Wärmedämmverbundsystems. Die deformierte Oberfläche der Lamellenplatte hat darüber hinaus hinsichtlich des ästhetischen Eindrucks Nachteile, wenn z.B. dünnschichtige Putzsysteme in gleichmäßiger Dicke aufgetragen werden. Entsprechende Deformierungen der Lamellenplatten müssen dann durch mehr oder weniger aufgetragenen Putz ausgeglichen werden, wobei sich die zu tragende Putzlast partiell erhöht, so daß gegebenenfalls die Querzugfestigkeit des Wärmedämmelementes nicht ausreicht, um die Putzschicht dauerhaft zu tragen. In diesen Bereichen kann es zu Beschädigungen des Wärmedämmverbundsystemes durch abbrökkelnde Putzschichten kommen. Weiterhin führt das Ausgleichen von unebenen Dämmstoffplatten zu einem Mehrverbrauch an Putzmaterial. Gegebenenfalls kommt es durch unterschiedlich dicken Putzauftrag auch zu unterschiedlichen Austrocknungsgraden der verschiedenen Putzzonen, die zu unerwünschten, wenn auch nur temporären Fleckenbildungen auf den Wandflächen führen.

Aus der DE 296 16 962 U1 ist beispielsweise ein Dämmstoffelement mit zumindest einer Mineralwolle-Dämmplatte aus Mineralfasern bekannt. Die Mineralfasern sind mit einem Bindemittel miteinander gebunden. Auf zumindest einer Hauptoberfläche der Dämmplatte ist eine Beschichtung aufgebracht, die zur Überwindung der Hydrophobie oberflächenaktiven Substanzen, insbesondere Alkalien und und/oder Erdalkalien aufweist, wobei die Beschichtung eine Einfärbung aufweist, die von der Färbung der Dämmplatte abweicht und welche Verfärbungen der Dämmplatte aufgrund chemischer Reaktionen der Beschichtung mit Bestandteilen der Dämmplatte, insbesondere des Bindemittels abdeckt. Die Beschichtung wird, wie an sich üblich auf einer horizontal ausgerichteten Unterlage auf die liegende Dämmplatte aufgebracht.

Weiterhin ist aus der US-A-5 268 015 ein Verfahren zur Herstellung einer Mineralfasermatte bekannt, bei dem zumindest eine Gruppe von drei Zerfaserungsagregaten über einem Paar von drehbaren Trommeln angeordnet wird, über welche die Fasern entweder direkt auf einem Förderband oder über Pendelvorrichtungen dem Förderband zugeführt und auf diesem abgelegt werden. Es bilden sich hierdurch mehrlagige Fasermatten.

Weiterhin ist aus der EP-A-0 418 150 eine weitere Vorrichtung zur Herstellung einer Fasermatte bekannt, bei der zumindest ein Teil der Fasermatte über eine eine konkave Aussenfläche aufweisende Walze geführt wird. Darüber hinaus weist diese vorbekannte Vorrichtung eine weitere Walze auf, die eine konvexe Oberfläche hat. Auch über diese Walze wird zumindest ein Teil der Fasermatte transportiert.

Schliesslich offenbart die US-A-3 772 054 ein Verfahren zur Verfestigung eines gewebeartigen Vliese aus faserigem Material. Zu diesem Zweck wird dem gewebeartigen Vlies aus faserigen Material eine Versteifungssubstanz auf eine Oberfläche aufgetragen. Hierzu ist ein Walzenpaar vorgesehen, durch welches das Faservlies geführt wird. Das Verfestigungsmittel wird über das Walzenpaar in die Oberflächen des Faservlieses eingebracht.

Ausgehend von diesem Stand der Technik liegt der Erfindung die **Aufgabe** zugrunde, ein Verfahren und eine Vorrichtung zur Beschichtung und/oder Imprägnierung von Mineralwolleprodukten zu schaffen, mit dem bzw. der Mineralwolleprodukte, insbesondere Mineralwolleplatten oder -matten, vorzugsweise Mineralwollelamellenplatten hergestellt werden können, bei denen die voranstehenden Nachteile vermieden werden.

Die **Lösung** sieht bei einem erfindungsgemäßen Verfahren vor, daß das Mineralwolleprodukt, vorzugsweise die Mineralwolleplatte oder -matte, insbesondere die Mineralwollelamellenplatte vor dem Auftrag der Beschichtung und/oder Imprägnierung zumindest entsprechend dem Schwindungsgrad der Beschichtung vorgespannt wird, derart, daß bei positivem Schwinden, nämlich Schrumpfen der Beschichtung die zu beschichtende Fläche des Mineralwolleproduktes konvex und bei negativem Schwinden, nämlich Ausdehnen der Beschichtung, die zu beschichtende Fläche des Mineralwolleproduktes konkav ausgerichtet wird.

Demzufolge sieht das erfindungsgemäße Verfahren vor, daß das Mineralwolleprodukt vor dem Auftragen der Beschichtung aus seiner ebenen Lage derart in eine kreisbogenabschnittförmige Lage gebracht wird, daß das Schwindungsverhalten der Beschichtung nach dem Aushärten der Beschichtung das Mineralwolleprodukt wieder in die für seinen Gebrauch vorteilhafte ebene Lage bringt. Der Grad der Vorspannung des Mineralwolleproduktes kann hierbei in vorteilhafter Weise empirisch ermittelt werden.

Nach einem weiteren Merkmal der Erfindung ist vorgesehen, daß das Mineralwolleprodukt in zwei, insbesondere rechtwinklig zueinander angeordneten, vorzugsweise parallel zu den Seitenrandbereichen verlaufenden Richtungen gespannt wird. Durch diese Vorgehensweise kann das Schwindungsverhalten der Beschichtung sowohl in Längs- als auch in Querrichtung des Mineralwolleproduktes ausgeglichen werden. Das Mineralwolleprodukt wird somit kallottenförmig aufgewölbt, bevor die Beschichtung aufgebracht wird.

Die Vorspannungen des Mineralwolleproduktes werden in Abhängigkeit des Verhältnisses Länge zu Breite des Mineralwolleproduktes eingestellt, so daß das fertigbeschichtete Mineralwolleprodukt eine möglichst ebene Beschichtungsfläche aufweist, die ein einfaches und fehlerfreies Verlegen des Mineralwolleproduktes in Kleberschichten auf Fassaden ermöglicht, ohne daß die voranstehend beschriebenen Nachteile auftreten.

Die Aufwölbung kann nach den voranstehenden Ausführungen ein- oder zweiseitig erfolgen. Diese Aufwölbung der Dämmstoffe wird soweit vorgenommen, daß die Schwindung der einseitig auf- bzw. eingebrachten Zement, Klebemörtel, Wasserglas- und sonstigen Lösungen bzw. Mischungen daraus kompensiert wird und nach dem Austrocknen eine ebene Oberfläche entsteht. Es besteht aber auch die Möglichkeit, daß der Schwindungsgrad der Beschichtung in Abhängigkeit der vorgesehenen Verwendung des Mineralwolleproduktes der Vorspannung überkompensiert wird. Beispielsweise kann eine derartige Vorgehensweise dann sinnvoll sein, wenn die Mineralwolleprodukte für die Dämmung von Säulen, Türmen oder dergleichen vorgesehen sind. Analog hierzu könne auch Schornstein-Dämmelemente dementsprechend verformt werden.

Nach einem weiteren Merkmal der Erfindung ist vorgesehen, daß das Mineralwolleprodukt auf seiner der Beschichtungsfläche gegenüberliegenden Fläche mit einem Unterdruck (Vakuum) beaufschlagt wird. Diese Vorgehensweise gewährleistet, daß die Beschichtung vollflächig und vollständig in das Mineralwolleprodukt eingearbeitet wird. Beispielsweise dient das Verformen und Vorspannen von Lamellenplatten dazu, die Poren zwischen den im wesentlichen senkrecht zu den großen Oberflächen verlaufenden Fasern zu öffnen, um das Beschichtungsmaterial, beispielsweise Zemente und Klebemörtel in die Zwischenräume (Poren) zwischen den Fasern einzulagern, so daß eine innige Verbindung zwischen den Fasern und den über die Oberfläche der Fasern herausstehenden Beschichtung entsteht.

Alternativ bzw. zusätzlich zum Einbringen des Beschichtungsmaterials mittels eines Unterdrucks kann vorgesehen sein, daß die Beschichtung nach Erreichen der erforderlichen Vorspannung des Mineralwolleproduktes mechanisch in die Oberfläche eingearbeitet wird.

Um das erfindungsgemäße Verfahren in einfacher Weise auch bei großen Stückzahlen derartiger Mineralwolleprodukte zuverlässig anzuwenden ist nach einem weiteren Merkmal der Erfindung vorgesehen, daß das Mineralwolleprodukt während des Aufbringens der Beschichtung im Bereich von zumindest zwei Stirnseiten fixiert wird, um die notwendige Vorspannung durch Anheben oder Absenken der zwischen den Stirnseiten angeordneten Beschichtungsflächen einzustellen. Diese Vorgehensweise stellt sicher, daß sich das Mineralwolleprodukt während des Aufbringens der Beschichtung nicht entspannt und so der erfindungsgemäße Effekt nicht eintreten kann bzw. die Beschichtung nicht ausreichend tief in das Mineralwolleprodukt eindringt.

Es ist nach einem weiteren Merkmal des erfindungsgemäßen Verfahrens vorgesehen, daß das Mineralwolleprodukt im gespannten Zustand nach dem Aufbringen der Beschichtung einem Trocknungs- und/oder Aushärtungsprozeß zugeführt wird. Hierbei kann auch vorgesehen sein, daß das Mineralwolleprodukt zusammen mit der Beschichtung komprimiert wird.

Seitens der erfindungsgemäßen Vorrichtung ist zur **Lösung** der erfindungsgemäßen Aufgabe vorgesehen, daß die Auflage zumindest in einem Teilbereich eine das Mineralwolleprodukt vorspannende, insbesondere kreisbogenabschnittförmige Einrichtung aufweist und daß die Auflage zumindest in diesem Bereich an den Seitenrändern des Mineralwolleproduktes angreifende Niederhalter aufweist.

Vorzugsweise besteht der Teilbereich der Auflage aus höhenverstellbar gelagerten Rollenförderern, die in Abhängigkeit des zu verarbeitenden Mineralwolleproduktes das Einstellen einer unterschiedlichen Wölbung und somit Vorspannung des Mineralwolleproduktes ermöglichen. Sobald das Mineralwolleprodukt diesen Teilbereich der Auflage erreicht hat, wird die gewünschte Vorspannung in dem Mineralwolleprodukt dadurch erzielt, daß die Seitenrändern des Mineralwolleproduktes vertikal fixiert gehalten und der Mittelbereich des Mineralwolleproduktes gleichmäßig angehoben wird, um einen gleichmäßig konvexen Kreisbogenabschnitt zu erzielen. Derart angeordnet wird die Beschichtung auf das Mineralwolleprodukt aufgebracht. Während des Austrocknens des Mineralwolleproduktes neigt die Beschichtung zum schrumpfen, wodurch das Mineralwolleprdukt ausgehend von der vorgespannten Stellung in eine Position gebracht wird, in der eine ebene beschichtete Fläche des Mineralwolleproduktes entsteht, so daß auch die weiteren Flächen des Mineralwolleproduktes die erwünschten Eigenschaften haben, die dem Mineralwolleprodukt, insbesondere in Form von Platten ein quaderförmiges Aussehen geben.

Die Rollenförderer bestehen hierbei insbesondere aus geringfügig balligen Rollen, um einen möglichst gleichmäßig geformten Kreisbogenabschnitt zu erzielen, wobei gleichzeitig eine große Auflagefläche für das Mineralwolleprodukt besteht, so daß eine Beschädigung des Mineralwolleproduktes durch schmale, in das Mineralwolleprodukt gegebenenfalls eindringende Rollenelemente vermeidbar ist.

Nach einem weiteren Merkmal der Erfindung ist vorgesehen, daß die Niederhalter als in die Stirnseiten des Mineralwolleproduktes eingreifenden und mit der Förderung des Mineralwolleproduktes mitlaufenden Stachelbändern, Stachelketten oder dergleichen ausgebildet sind.

Üblicherweise werden derartige Mineralwolleprodukte in einem stetigen Verfahren dadurch hergestellt, daß aufgeschmolzenes natürliches und/oder künstliches Gestein in einem Zerfaserungsgerät zerfasert wird, bevor die Fasern nach Hinzufügen von Bindemitteln auf einem Stetigförderer abgelegt werden. Die ungerichtet angeordneten Fasern können dann in an sich bekannter Weise direkt oder nach Bildung von Lamellen weiterverarbeitet werden. Entsprechende Trocknungs- und/oder Härtungsstationen, die mit oder ohne Komprimierung der Mineralfaserbahn arbeiten, sind aus dem Stand der Technik bekannt. Bei der erfindungsgemäßen Vorrichtung ist nunmehr vorgesehen, daß parallel zu dem Stetigförderer beidseitig jeweils ein Stachelband oder eine Stachelkette angeordnet ist, wobei die Stachelbänder bzw. Stachelketten mit ihren Stacheln in die Stirnseiten des Mineralfaservlieses eingreifen und dieses in der Höhenlage seiner Stirnseiten fixieren. Die Stachelbänder bzw. Stachelketten laufen hierbei mit einer mit der Fördergeschwindigkeit des Stetigförderers übereinstimmenden Geschwindigkeit, so daß eine Relativbewegung des Mineralfaservlieses zum Stetigförderer verhindert wird. Gleichzeitig wird das Mineralwollevlies durch die zuvor beschriebene Einrichtung, insbesondere die höhenverstellbar gelagerten Rollenförderer derart in seinem Mittelbereich angehoben, daß die notwendige Vorspannung zum Ausgleich der Schrumpfung der Beschichtung ausreicht.

Vorzugsweise ist der Teilbereich der Auflage vor einem Trocknungsofen und/oder einer Verdichtungsstufe angeordnet, so daß die Austrocknung der Beschichtung unmittelbar nach dem Auftrag beschleunigt werden kann. Diese Vorgehensweise hat den Vorteil, daß das Zeitintervall, in dem das Mineralwolleprodukt vorgespannt gehalten werden muß, verkürzt wird, so daß keine plastischen Formänderungen eintreten.

Eine Weiterbildung sieht hierbei vor, daß sich die Niederhalter bis in den Trocknungsofen und/oder die Verdichtungsstufe erstrecken.

Es ist weiterhin vorgesehen, daß der Teilbereich der Auflage eine auf der der zu beschichtenden Fläche des Mineralwolleproduktes gegenüberliegenden Fläche des Mineralwolleproduktes einen Saugdruck erzeugende Einrichtung aufweist. Diese Einrichtung stellt sicher, daß die Beschichtung ausreichend tief in das Mineralwolleprodukt eingebracht wird. Hierzu weist die den Saugdruck erzeugende Einrichtung vorzugsweise eine Vielzahl von Saugdüsen auf, wobei es als vorteilhaft anzusehen ist, wenn die den Saugdruck erzeugende Einrichtung parallel zum Mineralwolleprodukt bewegbar ist.

Die den Saugdruck erzeugende Einrichtung ist gegen das Mineralwolleprodukt preßbar ausgebildet, so daß das Mineralwolleprodukt mittels der Einrichtung verformt werden kann. Diese den Saugdruck erzeugende Einrichtung kann daher den erforderlichen Teilbereich der Auflage bilden, in welchem das Mineralwolleprodukt verformt wird. Andererseits besteht die Möglichkeit, daß beispielsweise die voranstehend beschriebenen Rollenförderer durch diese Einrichtung ergänzt werden.

Weiterhin ist vorgesehen, daß dem Teilbereich der Auflage zumindest ein Abstreifer gegenüberliegend angeordnet ist. Vorzugsweise sind mehrere Abstreifer vorgesehen, die nach innen V-förmig ausgebildet sind.

Alternativ oder ergänzend zu den Abstreifem können federnd aufgehängte Estrichscheiben oberhalb des Teilbereichs der Auflage angeordnet sein. Hierbei hat es sich als vorteilhaft erwiesen, die Estrichstreifen planetenförmig zu führen.

Weitere Merkmale und Vorteile ergeben sich aus der nachfolgenden Beschreibung dazugehörigen Zeichnung. In der Zeichnung zeigt:
- Figur 1: eine Vorrichtung zur Beschichtung und/oder Imprägnierung von Mineralwolleprodukten in schematisch dargestellter Seitenansicht;
- Figur 1.1: die Vorrichtung gemäß Figur 1 in einer Schnittansicht entlang der Linie A - A in Figur 1;
- Figur 2: eine detaillierte Seitenansicht einer verstellbaren Auflage der Vorrichtung gemäß Figur 1;
- Figur 3: eine zweite Ausführungsform der Auflage gemäß Figur 2;
- Figur 4: eine Querschnittsansicht einer Steinwolle-Lamellenplatte vor der Beschichtung;
- Figur 5: die Steinwolle-Lamellenplatte gemäß dem Stand der Technik nach der Beschichtung;
- Figur 6: die Steinwolle-Lamellenplatte gemäß Figur 4 während der Beschichtung nach dem erfindungsgemäßen Verfahren und
- Figur 7: die Steinwolle-Lamellenplatte gemäß Figur 6 nach der Beschichtung gemäß dem erfindungsgemäßen Verfahren.

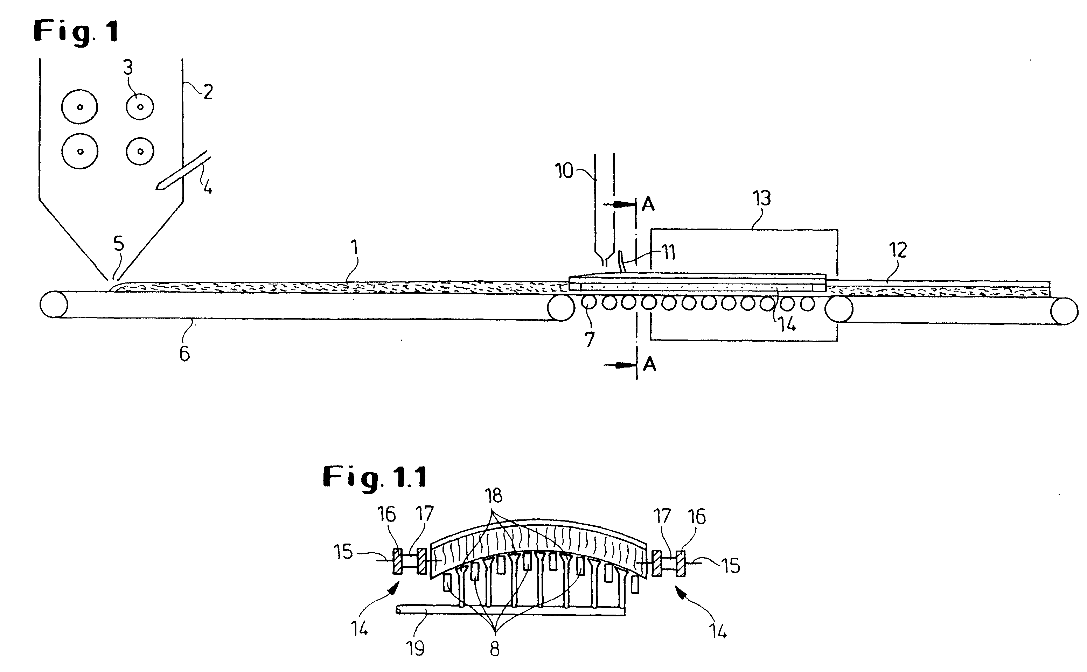

Die in Figur 1 dargestellte Vorrichtung zur Beschichtung und/oder Imprägnierung von Mineralwolleprodukten, nämlich eines in Mineralwolleplatten zu unterteilenden Mineralwollevlieses 1 weist eine an sich bekannte Zerfaserungseinrichtung 2 auf, die unterhalb eines nicht näher dargestellten Schmelzofens angeordnet ist. Aus diesem nicht näher dargestellten Schmelzofen fließt der Zerfaserungseinrichtung 2 eine aus künstlichen oder natürlichen Steinen hergestellte Schmelze zu, die in mikrofeine Fasern zerfasert wird. Hierzu weist die Zerfaserungseinrichtung 2 mehrere rotierend angetriebene Zerfaserungsscheiben 3 auf. Unterhalb dieser Zerfaserungsscheiben 3 wird den Fasern ein Bindemittel und/oder ein Imprägnierungsmittel zugesetzt, welches über Düsen 4 in die Zerfaserungseinrichtung 2 eingegeben wird.

Die Zerfaserungseinrichtung 2 ist an ihrem unteren Ende trichterförmig ausgebildet und weist eine Öffnung 5 auf, aus welcher die mit dem Binde- und/oder Imprägniermittel versehenen Fasern aus der Zerfaserungseinrichtung 2 austreten. Die derart vorbereiteten Fasern werden auf einem Förderband 6 abgelegt und bilden das Mineralwollevlies 1. Durch das Bindemittel werden die einzelnen Fasern zu diesem Mineralwollevlies 1 verbunden.

Am Ende des Förderbandes 6 ist ein Rollenförderer 7 angeordnet, der aus einer Vielzahl in Förderrichtung hintereinander angeordneten Rollenbändem besteht. Die in Achsrichtung der Rollenbänder nebeneinander angeordneten Rollen 8 sind höhenverstellbar gelagert, so daß der Rollenförderer 7 das Mineralwollevlies 1 in einer bestimmten kreisbogenabschnittförmigen und vorgespannten Form fördert. Der Rollenförderer 7 stellt einen Teilbereich der gesamten Förderanlage für das Mineralwollevlies 1 dar, welches letztendlich eine Auflage für das Mineralwollevlies ist.

Oberhalb des Rollenförderers 7 ist in seinem Anfangsbereich ein Bevorratungsbehälter 10 für ein Beschichtungsmaterial, beispielsweise Klebemörtel, Kunststoffdispersion, Mikrozement oder dergleichen angeordnet. Es können auch mehrere Bevorratungsbehälter 10 in Fördereinrichtung nebeneinander vorgesehen sein, wenn das Mineralwollevlies 1 mit unterschiedlichen Beschichtungen versehen werden soll, die entweder alternativ oder additiv auf das Mineralwollevlies 1 aufgebracht werden. Der Bevorratungsbehälter 10 weist eine Öffnung auf, durch welche eine bestimmte Menge des Beschichtungsmaterials auf die Oberfläche des vorgespannten Mineralwollevlieses aufgegeben wird, so daß eine gleichmäßige Beschichtung über die gesamte Breite des Mineralwollevlieses 1 und über die Länge des Mineralwollevlieses 1 aufgebracht wird. Die Materialstärke der Beschichtung 12 auf dem Mineralwollevlies 1 kann hierbei in Abhängigkeit der Öffnungsgröße der Austrittsöffnung des Bevorratungsbehälters 10 und/oder in Abhängigkeit der Fördergeschwindigkeit des Rollenförderers 7 und des Förderbandes 6 variiert werden. Hierbei hat es sich als vorteilhaft erwiesen, das Förderband 6 und den Rollenförderer 7 mit einer konstanten Fördergeschwindigkeit zu betreiben und die Materialstärke der Beschichtung 12 lediglich über eine veränderbare Öffnung des Bevorratungsbehälters 10 einzustellen.

Die Beschichtung wird derart auf dem Mineralwollevlies 1 angeordnet, daß ein Teil der Beschichtung 12 in die Oberfläche des Mineralwollevlieses 1 eindringt und ein weiterer, vorzugsweise größerer Teil der Beschichtung 12 auf der Oberfläche des Mineralwollevlieses 1 angeordnet ist. Hierbei ist die Vorspannung des Mineralwollevlieses dahingehend vorteilhaft, daß das Porenvolumen zwischen den einzelnen Fasern durch das Biegen des Mineralwollevlieses 1 im Oberflächenbereich desselben vergrößert wird, so daß die Beschichtung 12 besser in die Poren des Mineralwollevlieses 1 eindringen kann. Die Verwendung von groberen Beschichtungen 12, wie beispielsweise Zementpartikeln ist daher möglich.

Im Anschluß an den Bevorratungsbehälter 10 ist ein Abstreifer 11 oberhalb des Rollenförderers 7 angeordnet, der bestehende Ungleichmäßigkeiten des Beschichtungsmaterials auf dem Mineralwollevlies 1 ausgleicht. Das Mineralwollevlies 1 erhält dadurch eine gleichmäßige Beschichtung 12, die - wie bereits ausgeführt - teilweise in die Oberfläche des Mineralwollevlieses 1 eindringt und im wesentlichen auf der Oberfläche des Mineralwollevlieses 1 aufliegt.

Wie an sich üblich wird das Mineralwollevlies 1 zusammen mit der Beschichtung 12 im Anschluß an die Vergleichmäßigung durch den Abstreifer 11 einem Härteofen 13 zugeführt, in dem sowohl das Bindemittel zwischen den einzelnen Fasern des Mineralwollevlieses 1 als auch die Beschichtung 12 ausgehärtet werden. Hierbei ist es vorteilhaft, das vorgespannte Mineralwollevlies 1 während des Härteprozesses aus seiner vorgespannten Lage in die natürliche gestreckte Lage zu überführen, so daß das beschichtete Mineralwollevlies 1 mit der Beschichtung 12 insgesamt wieder eine quaderförmige Form einnimmt.

Parallel zu dem Rollenförderer 7 sind an beiden Längsseiten des Rollenförderers 7 Niederhalter 14 angeordnet, die aus einem mit Stacheln 15 besetzten Band 16 bestehen, welches um zwei Umlenkrollen 17 förderbandartig umläuft. Die Stacheln 15 der Niederhalter 14 greifen in die Stirnseiten des Mineralwollevlieses 1 ein und halten dieses Mineralwollevlies 1 im Stirnseitenbereich nieder, wohingegen die Rollen 8 des Rollenförderers 7 das Mienralwollevlies 1 im Mittelbereich kreisbogenförmig anheben.

Die genaue Anordnung des Mineralwollevlieses 1 im Bereich des Rollenförderers 7 ist in Figur 1.1 zu erkennen.

Um das Eindringen der Beschichtung 12 in das Mineralwollevlies 1 zu verstärken und zu vergleichmäßigen sind zwischen den Rollen 8 des Rollenförderers 7 Saugdüsen 18 angeordnet, die an eine gemeinsame Unterdruckleitung 19 angeschlossen sind. Über diese Saugdüsen 18 wird in den Mineralwollevlies 1 ein Unterdruck erzeugt, der einen Teil des Beschichtungsmaterials in das Mineralwollevlies 1 einsaugt.

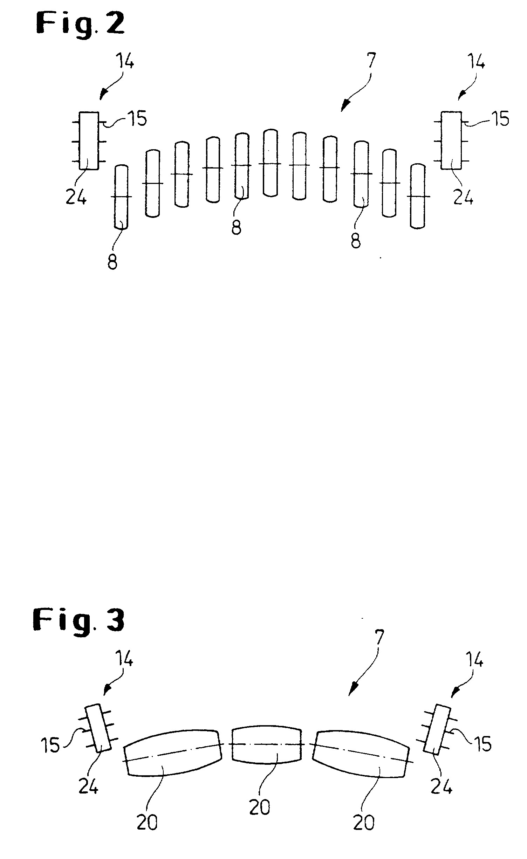

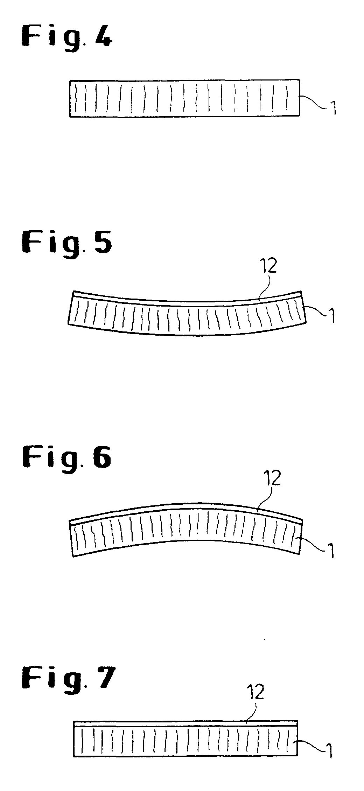

Die Figuren 2 und 3 zeigen zwei unterschiedliche Ausführungen des Rollenförderers 7. In Figur 2 sind scheibenförmige oder kegelstumpfförmige Rollen 8 dargestellt, die jeweils in Längsrichtung höhenverstellbar sind. Diese Rollen 8 werden von einem zentralen Antrieb über nicht näher dargestellte Ketten angetrieben. Seitlich der Rollen 8 sind Stachelwalzen 24 als Niederhalter 14 angeordnet. Diese Stachelwalzen 24 sind mit Stacheln 15 besetzt, welche in horizontaler Richtung ausgerichtet sind und in die Stirnseiten des Mineralwollevlieses 1 eingreifen.

In Figur 3 ist eine Ausführungsform des Rollenförderers 7 dargestellt, welche ballige Walzen 20 oder Förderbänder mit balligen Tragrollen aufweist, wobei die Walzen 20 bzw. Tragrollen in Höhe und Neigung verstellbar sind. Auch bei dieser Ausführungsform sind seitlich Stachelwalzen 24 entsprechend der Figur 2 angeordnet.

Mit der voranstehend beschriebenen Vorrichtung kann ein Verfahren zur Beschichtung und/oder Imprägnierung von Mineralwolleprodukten, vorzugsweise Mineralwolleplatten oder -matten, insbesondere Mineralwollelamellenplatten, mit einem Klebemörtel, einer Kunststoffdispersion, Mikrozementen und/oder einer anderen Beschichtung 12 ausgeführt werden, bei der das Mineralwolleprodukt, vorzugsweise die Mineralwolleplatte oder -matte, insbesondere die Mineralwollelamellenplatte vor dem Auftrag der Beschichtung 12 und/oder Imprägnierung zumindest entsprechend dem Schwindungsgrad der Beschichtung 12 vorgespannt wird, derart, daß bei positivem Schwinden, nämlich Schrumpfen der Beschichtung 12, die zu beschichtende Fläche des Mineralwolleproduktes konvex und bei negativem Schwinden, nämlich Ausdehnen der Beschichtung 12, die zu beschichtende Fläche des Mineralwolleproduktes konkav ausgerichtet wird.

In den Figuren 4 bis 7 ist die Vorgehensweise veranschaulicht. Die Figur 4 zeigt hierzu eine Steinwolle-Lamellenplatte, die planeben gesägt ist. Wird auf diese aus einem Mineralwollevlies 1 hergestellte Steinwolle-Lamellenplatte eine Beschichtung 12 aufgebracht, so neigt diese Beschichtung 12 zum Schwinden, d.h. zieht sich zusammen. Hierdurch nimmt die Steinwolle-Lamellenplatte eine Figur 5 dargestellte Form an, d.h. die Steinwolle-Lamellenplatte erhält einen Stich, der eine bestimmte Krümmung aufweist. Derartige Steinwolle-Lamellenplatten sind hinsichtlich ihrer Verarbeitung in Wärmedämmverbundsystemen problematisch. Es wird diesbezüglich auf die Ausführungen in der Beschreibungseinleitung verwiesen.

Nach dem erfindungsgemäßen Verfahren wird die Steinwolle-Lamellenplatte im Bereich ihrer längsseitigen Stirnseiten in ihrer Position arretiert und der Bereich zwischen den beiden parallel zueinander verlaufenden Stirnseiten nach oben gewölbt, bevor die Beschichtung 12 aufgebracht wird. Figur 6 zeigt die Steinwolle-Lamellenplatte in aufgewölbter Position mit aufgebrachter Beschichtung 12. Auch bei dieser Vorgehensweise schwindet die aufgebrachte Beschichtung 12 jedoch mit dem Erfolg, daß das Schwindverhalten der Beschichtung 12 die in Figur 6 vorgespannte Steinwolle-Lamellenplatte derart verformt, daß die vorteilhafte Formgebung nach Figur 4, dargestellt in Figur 7 erzielt wird.

Als bevorzugte Beschichtung 12 hat sich beispielsweise eine aus der EP-C-0 041 212 bekannte mit Hydratmineralen gefüllte Wasserglas-Kunststoff-Mischung erwiesen, wobei diese Mischung auf die zu beschichtende Oberfläche ausgesprüht und eventuell zusätzlich in die Oberfläche eingerieben wird. Nach dem Durchlaufen der Trocknungszone im Härteofen 13 werden die Stirnseiten der Steinwolle-Lamellenplatte freigegeben, so daß die inzwischen kontrahierende bzw. geschwundene Beschichtung 12 die Oberfläche in eine ebene Lage zieht.

Das erfindungsgemäße Verfahren kann selbstverständlich auch mit entsprechenden Ergänzungen verwendet werden, um trockenen Zement oder trockene Zement-Mörtel-Gemische in die Lamellen einzusaugen. Durch eine eventuell vergrößerte Wölbung bzw. Vorspannung, in deren Bildung auch die seitlichen Transporteinrichtungen durch entsprechende Verstellwirkungen eingreifen, wird die Oberfläche so aufgeweitet, daß mit einem verhältnismäßig geringen Unterdruck eine genau zu dosierende Materialmenge beispielsweise in einer Tiefe von maximal 5 mm in die Steinwolle-Lamellenplatte eingebracht werden kann. Hierzu können verstellbare oder verformbare Saugdüsen auf der Unterseite der Lamellenplatte in die Transporteinrichtung, insbesondere in den Rollenförderer 7 geschaltet sein. Anstelle feststehender Düsen können auch mitlaufende Düsen verwendet werden, die sich taktweise von unten gegen die Lamellenplatte pressen, wobei sie gleichzeitig die Lamellen nach oben drücken. Hierbei kann beispielsweise auch eine mitlaufende Absaugdüse vorgesehen sein, die in Form einer Exzenter-Bewegung gegen die Unterseite der Lamellen gepreßt wird, diese aufwölbt und gleichzeitig den aufgestreuten Zement einsaugt.

Mit dem erfindungsgemäßen Verfahren können somit Steinwolle-Lamellenplatten und andere Mineralwolleprodukte mit angemachtem Zement, respektive Zementmörtel beschichtet werden. Der Zement bzw. Mörtelbrei wird auf die aufgewölbte Oberfläche aufgeschüttet mittels V-förmig nach innen gerichteten Abstreifem geglättet und mit federnd aufgehängten Estrichscheiben in die Oberfläche der Lamellenplatte eingerieben. Abstreifer und Estrichscheiben werden vorzugsweise planetenförmig geführt, so daß sich ihre Wirkflächen überlappen.

Die Beschichtungsmenge, deren Konsistenz sowie die Eindrucktiefe beeinflussen den Wiederstand der Beschichtung gegenüber der Rückstellkraft des Dämmstoffes. Diese Faktoren müssen ebenso wie die erforderliche Aufwölbung in Abhängigkeit der zu verarbeitenden Materialien empirisch ermittelt werden.

## Patentansprüche

1. Verfahren zur Beschichtung und/oder Imprägnierung von Mineralwolleprodukten, vorzugsweise Mineralwolleplatten oder -matten, insbesondere Mineralwollelamellenplatten, mit einem Klebemörtel, einer Kunststoffdispersion, Mikrozementen und/oder einer anderen Beschichtung,
**dadurch gekennzeichnet,**
daß das Mineralwolleprodukt, vorzugsweise die Mineralwolleplatte oder -matte, insbesondere die Mineralwollelamellenplatte vor dem Auftrag der Beschichtung und/oder Imprägnierung zumindest entsprechend dem Schwindungsgrad der Beschichtung vorgespannt wird, derart, daß bei positivem Schwinden, nämlich Schrumpfen der Beschichtung, die zu beschichtende Fläche des Mineralwolleproduktes konvex, und bei negativem Schwinden, nämlich Ausdehnen der Beschichtung, die zu beschichtende Fläche des Mineralwolleproduktes konkav ausgerichtet wird.

2. Verfahren nach Anspruch 1,
**dadurch gekennzeichnet,**
daß das Mineralwolleprodukt in zwei insbesondere rechtwinklig zueinander angeordneten, vorzugsweise parallel zu den Seitenrandbereichen verlaufenden Richtungen gespannt wird.

3. Verfahren nach Anspruch 2,
**dadurch gekennzeichnet,**
daß die Vorspannungen des Mineralwolleproduktes in Abhängigkeit des Verhältnisses Länge zu Breite des Mineralwolleproduktes eingestellt werden.

4. Verfahren nach Anspruch 1,
**dadurch gekennzeichnet,**
daß der Schwindungsgrad der Beschichtung in Abhängigkeit der vorgesehenen Verwendung des Mineralwolleproduktes bei der Vorspannung überkompensiert wird.

5. Verfahren nach Anspruch 1,
**dadurch gekennzeichnet,**
daß das Mineralwolleprodukt auf seiner der Beschichtungsfläche gegenüberliegenden Fläche mit einem Unterdruck, insbesondere Vakuum beaufschlagt wird.

6. Verfahren nach Anspruch 1,
**dadurch gekennzeichnet,**
daß die Beschichtung nach Erreichen der erforderlichen Vorspannung des Mineralwolleproduktes mechanisch in die Oberfläche eingearbeitet wird.

7. Verfahren nach Anspruch 1,
**dadurch gekennzeichnet,**
daß das Mineralwolleprodukt während des Aufbringens der Beschichtung im Bereich von zumindest zwei Stirnseiten fixiert wird, um die notwendige Vorspannung durch Anheben oder Absenken der zwischen den Stirnseiten angeordneten Beschichtungsfläche einzustellen.

8. Verfahren nach Anspruch 1,
**dadurch gekennzeichnet,**
daß das Mineralwolleprodukt im gespannten Zustand nach dem Aufbringen der Beschichtung einem Trocknungs- und/oder Aushärtungsprozeß zugeführt wird.

9. Verfahren nach Anspruch 1,
**dadurch gekennzeichnet,**
daß ein trockenes, pulverförmiges und aushärtbares Bindemittel, insbesondere trockener Zement, Trockenmörtel und/oder Mischungen daraus eingebracht wird.

10. Vorrichtung zur Beschichtung und/oder Imprägnierung von Mineralwolleprodukten, vorzugsweise Minerawolleplatten oder -matten, insbesonder Mineralwollelamellenplatten, mit einem Klebemörtel, einer Kunststoffdispersion, Mikrozementen und/oder einer anderen Beschichtung, insbesondere unter Anwendung des Verfahrens nach einem der Ansprüche 1 bis 8, mit einer Auflage für das Mineralwolleprodukt, insbesondere einem Stetigförderer, vorzugsweise in Form eines Förderbandes,
**dadurch gekennzeichnet,**
daß die Auflage zumindest in einem Teilbereich eine das Mineralwolleprodukt vorspannende, insbesondere kreisbogenabschnittförmig verformende Einrichtung aufweist und daß die Auflage zumindest in diesem Bereich an den Seitenrändern des Mineralwolleproduktes angreifende Niederhalter (14) aufweist.

11. Vorrichtung nach Anspruch 10,
**dadurch gekennzeichnet,**
daß der Teilbereich der Auflage aus höhenverstellbar gelagerten Rollenförderern (7) besteht.

12. Vorrichtung nach Anspruch 11,
**dadurch gekennzeichnet,**
daß die Rollenförderer (7) aus geringfügig balligen Rollen (8) besteht.

13. Vorrichtung nach Anspruch 10,
**dadurch gekennzeichnet,**
daß die Niederhalter (14) als in die Stirnseiten des Mineralwolleproduktes eingreifende und mit der Förderung des Mineralwolleproduktes mitlaufende Stachelbänder oder Stachelketten ausgebildet sind.

14. Vorrichtung nach Anspruch 10,
**dadurch gekennzeichnet,**
daß der Teilbereich der Auflage vor einem Trocknungsofen (13) und/oder einer Verdichtungsstufe angeordnet ist.

15. Vorrichtung nach Anspruch 14,
**dadurch gekennzeichnet,**
daß sich die Niederhalter (14) bis in den Trocknungsofen (13) und/oder die Verdichtungsstufe erstrecken.

16. Vorrichtung nach Anspruch 10,
**dadurch gekennzeichnet,**
daß der Teilbereich der Auflage eine auf der zu beschichtenden Fläche des Mineralwolleproduktes gegenüberliegenden Fläche des Mineralwolleproduktes einen Saugdruck erzeugende Einrichtung aufweist.

17. Vorrichtung nach Anspruch 16,
**dadurch gekennzeichnet,**
daß die Einrichtung eine Vielzahl von Saugdüsen (18) aufweist.

18. Vorrichtung nach Anspruch 16,
**dadurch gekennzeichnet,**
daß die den Saugdruck erzeugende Einrichtung parallel zum Mineralwolleprodukt bewegbar ist.

19. Vorrichtung nach Anspruch 16,
**dadurch gekennzeichnet,**
daß die den Saugdruck erzeugende Einrichtung gegen das Mineralwolleprodukt preßbar ist, so daß das Mineralwolleprodukt mittels der Einrichtung verformt, nämlich vorgespannt wird.

20. Vorrichtung nach Anspruch 10,
**dadurch gekennzeichnet,**
daß dem Teilbereich der Auflage zumindest ein Abstreifer (11) gegenüberliegend angeordnet ist.

21. Vorrichtung nach Anspruch 20,
**dadurch gekennzeichnet,**
daß jeder Abstreifer nach innen hin V-förmig ausgebildet ist.

22. Vorrichtung nach Anspruch 10,
**dadurch gekennzeichnet,**
daß oberhalb des Teilbereichs der Auflage federnd aufgehängte Estrichscheiben angeordnet sind.

23. Vorrichtung nach Anspruch 20 und Anspruch 22,
**dadurch gekennzeichnet,**
daß die Estrichscheiben planetenförmig geführt sind.

## Claims

1. Method for coating and/or impregnating mineral wool products, preferably slabs or mats made of mineral wool and particularly lamellar slabs made of mineral wool, with adhesive mortar, a plastic disporsion, micro cements and/or other coating,
**characterized in**
that, prior to being coated or impregnated, said mineral wool product, preferably said slab or mat made of mineral wool and particularly said lamellar slab made of mineral wool is pre-stretched at least corresponding to the degree of shrinking in such a manner that in the case of positive shrinking, namely shrinking of the coating, the surface to be coated of the mineral wool product is aligned in a convex fashion and in the case of negative shrinking, namely expansion of the coating, the surface to be coated of the mineral wool product is aligned in a concave fashion.

2. Method according to claim 1,
**characterized in**
that said mineral wool product is stretched particularly in two mutually orthogonal directions that preferably run parallel to the lateral rim portions.

3. Method according to claim 2,
**characterized in**
that the pre-stretching of the mineral wool product is respectively set in response to the length/width relationship of the mineral wool product.

4. Method according to claim 1
**characterized in**
that the degree of shrinking of the coating is over-compensated during pre-stretching in response to the intended use of the mineral wool product.

5. Method according to claim 1,
**characterized in**
that low pressure and particularly vacuum is applied to the surface of the mineral wool product opposing its surface to be coated.

6. Method according to claim 1,
**characterized in**
that after reaching the required pre-stretching of said mineral wool product the coating is mechanically worked into the surface.

7. Method according to claim 1,
**characterized in**
that during applying the coating said mineral wool product is fixed within the region of at least two front faces in order to set the required pre-stretching by means of raising and lowering the coating surface that is arranged between said two front faces.

8. Method according to claim 1,
**characterized in**
that said mineral wool product in its stretched condition after the application of the coating is advanced to a drying and/or curing process.

9. Method according to claim 1,
**characterized in**
that a dry, powdery and curable binder, in particular dry cement, dry mortar or mixtures thereof are fed.

10. Apparatus for coating and/or impregnating mineral wool products, preferably slabs or mats made of mineral wool and particularly lamellar slabs made of mineral wool, with adhesive mortar, a plastic dispersion, micro cements and/or other coating, particularly under applying the method according to one of the claims 1 to 8, said apparatus having a support for said mineral wool product, particularly a continuous conveyor and preferably a belt conveyor,
**characterized in**
that said support includes at least in a part-portion thereof means for pre-stretching and particularly for deforming said mineral wool product in the fashion of an arc-of-a-circle section and that said support has at least in this region holding-down elements (14) that engage the lateral rims of the mineral wool product.

11. Apparatus according to claim 10
**characterized in**
that said part-portion of the support is comprised of roller-type conveyors (7) supported in a height-adjustable fashion.

12. Apparatus according to claim 11,
**characterized in**
that said roller-type conveyors (7) are comprised of slightly crowned rollers (8).

13. Apparatus according to claim 10,
**characterized in**
that said holding-down elements (14) are configured as spike belts or spike chains that engage in the faces of the mineral wool product and move along with said advancing mineral wool product.

14. Apparatus according to claim 10,
**characterized in**
that said part-portion of the support is arranged before a drying oven (13) and/or a compaction stage.

15. Apparatus according to claim 14,
**characterized in**
that the holding-down elements (14) extend as far as into the drying oven (13) and/or the compacting stage.

16. Apparatus according to claim 10,
**characterized in**
that the part-portion of the support includes means for generating suction pressure on the surface of the mineral wool product opposing the surface to be coated of said mineral wool product.

17. Apparatus according to claim 16,
**characterized in**
that said means has a plurality of suction nozzles (18).

18. Apparatus according to claim 16,
**characterized in**
that the means generating the suction pressure is movable parallel to the mineral wool product.

19. Apparatus according to claim 16,
**characterized in**
that the means generating the suction pressure can be pressed against the mineral wool product, so that the mineral wool product is deformed, i.e. pre-stretched by said means.

20. Apparatus according to claim 10,
**characterized in**
that at least one stripper (11) is arranged vis à vis said part-portion of the support.

21. Apparatus according to claim 20,
**characterized in**
that each stripper is formed in a V-shape towards the inside.

22. Apparatus according to claim 10,
**characterized in**
that above said part-portion of the support spring-suspended lime disks are arranged.

23. Apparatus according to claim 20 and 22,
**characterized in**
that said lime disks are guided in a planet-like fashion.

## Revendications

1. Procédé pour le revêtement et/ou l'imprégnation de produits de laine minérale, de préférence des plaques ou des nattes de laine minérale, en particulier des plaques à lamelles de laine minérale, avec un mortier colle, une dispersion synthétique, des microciments et/ou un autre revêtement,
caractérisé en ce
que le produit de laine minérale, de préférence la plaque ou la natte de laine minérale, en particulier la plaque à lamelles de laine minérale, est précontrainte avant l'application du revêtement et/ou de l'imprégnation, au moins de manière correspondante au degré de retrait du revêtement, de telle manière que, lors d'un retrait positif, à savoir le retrait au durcissement du revêtement, la surface à revêtir du produit de laine minérale est orientée convexe et, lors d'un retrait négatif, à savoir la dilatation du revêtement, la surface à revêtir du produit de laine minérale est orientée concave.

2. Procédé selon la revendication 1,
caractérisé en ce
que le produit de laine minérale est tendu dans deux sens placés en particulier à angle droit l'un par rapport à l'autre, de préférence parallèlement aux zones des bords latéraux.

3. Procédé selon la revendication 2,
caractérisé en ce
que les précontraintes du produit de laine minérale sont réglées en fonction du rapport de la longueur et de la largeur du produit de laine minérale.

4. Procédé selon la revendication 1,
caractérisé en ce
que le degré de retrait du revêtement est surcompensé lors de la précontrainte en fonction de l'utilisation prévue du produit de laine minérale.

5. Procédé selon la revendication 1,
caractérisé en ce
que le produit de laine minérale est chargé sur sa surface opposée à la surface de revêtement avec une dépression, en particulier avec du vide.

6. Procédé selon la revendication 1,
caractérisé en ce
que le revêtement est intégré mécaniquement dans la surface après avoir atteint la précontrainte nécessaire du produit de laine minérale.

7. Procédé selon la revendication 1,
caractérisé en ce
que le produit de laine minérale est fixé pendant l'application du revêtement dans la zone d'au moins deux faces frontales pour régler la précontrainte nécessaire en soulevant ou en abaissant la surface de revêtement placée entre les faces frontales.

8. Procédé selon la revendication 1,
caractérisé en ce
que le produit de laine minérale est soumis, à l'état tendu après l'application du revêtement, à un processus de séchage et/ou de durcissement.

9. Procédé selon la revendication 1,
caractérisé en ce
qu'un liant sec, en forme de poudre et pouvant durcir, en particulier un ciment sec, un mortier sec et/ou des mélanges de ceux-ci, est mis en place.

10. Dispositif pour le revêtement et/ou l'imprégnation de produits de laine minérale, de préférence des plaques ou des nattes de laine minérale, en particulier des plaques à lamelles de laine minérale, avec un mortier colle, une dispersion synthétique, des microciments et/ou un autre revêtement, en particulier en appliquant le procédé selon l'une des revendications 1 à 8, avec un support pour le produit de laine minérale, en particulier un système de manutention continue, de préférence en forme de bande transporteuse,
caractérisé en ce
que le support présente, au moins dans une zone partielle, un dispositif qui précontraint le produit de laine minérale, en particulier qui le déforme en forme de section d'arc de cercle et que le support présente, au moins dans cette zone, des dispositifs de maintien en position basse (14) qui mordent sur les bords latéraux du produit de laine minérale.

11. Dispositif selon la revendication 10,
caractérisé en ce
que la zone partielle du support est constituée par des transporteurs à rouleaux (7) positionnés réglables en hauteur.

12. Dispositif selon la revendication 11,
caractérisé en ce
que les transporteurs à rouleaux (7) sont constitués par des rouleaux légèrement bombés (8).

13. Dispositif selon la revendication 10,
caractérisé en ce
que les dispositifs de maintien en position basse (14) sont configurés comme des bandes à ergots ou des chaînes à ergots qui s'engrènent dans les faces frontales du produit de laine minérale et/ou qui sont entraînées en même temps que le transport du produit de laine minérale.

14. Dispositif selon la revendication 10,
caractérisé en ce
que la zone partielle du support est placée devant un four de séchage (13) et/ou un étage de compression.

15. Dispositif selon la revendication 14,
caractérisé en ce
que les dispositifs de maintien en position basse (14) s'étendent jusque dans le four de séchage (13) et/ou l'étage de compression.

16. Dispositif selon la revendication 10,
caractérisé en ce
que la zone partielle du support présente un dispositif qui produit une pression d'aspiration sur la surface du produit de laine minérale qui est opposée à la surface à revêtir du produit de laine minérale.

17. Dispositif selon la revendication 16,
caractérisé en ce
que le dispositif présente une multitude de tuyères d'aspiration (18).

18. Dispositif selon la revendication 16,
caractérisé en ce
que le dispositif qui produit la pression d'aspiration est mobile parallèlement au produit de laine minérale.

19. Dispositif selon la revendication 16,
caractérisé en ce
que le dispositif qui produit la pression d'aspiration peut être pressé contre le produit de laine minérale si bien que le produit de laine minérale est déformé au moyen du dispositif, à savoir est précontraint par le dispositif.

20. Dispositif selon la revendication 10,
caractérisé en ce
qu'au moins un racloir (11) est placé en face de la zone partielle du support.

21. Dispositif selon la revendication 20,
caractérisé en ce
que chaque racloir est configuré en forme de V vers l'intérieur.

22. Dispositif selon la revendication 10,
caractérisé en ce
que des disques de chape suspendus de manière élastique sont placés au-dessus de la zone partielle du support.

23. Dispositif selon la revendication 20 et la revendication 22,
caractérisé en ce
que les disques de chape sont guidés en forme de planète.
